# FASCICULE DE BREVET EUROPEEN

(11) **EP 0 800 029 B1**
(45) Date de publication et mention de la délivrance du brevet: **14.06.2000**
(21) Numéro de dépôt: 97400704.9
(22) Date de dépôt: 27.03.1997
(51) Int. Cl.: F16J 15/52

(54) **Dispositif de traversée étanche d'une cloison par un organe mobile**
Abgedichtete Durchführung eines beweglichen Gliedes
Sealed feedthrough for a moving part

(30) Priorité: 03.04.1996 FR 9604169
(43) Date de publication de la demande: 08.10.1997
(73) Titulaire: COMMISSARIAT A L'ENERGIE ATOMIQUE, 75015 Paris (FR)
(72) Inventeur: Delepine, Jean, 38000 Grenoble (FR); Duffar, Thierry, 38700 La Tronche (FR); Nabot, Jean-Philippe, 38120 Saint-Egreve (FR); Wales, Bernard, 38320 Poisat (FR)
(74) Mandataire: Dubois-Chabert, Guy

(56) Documents cités:
- EP-A- 0 653 504
- FR-A- 1 560 122
- GB-A- 2 146 713
- US-A- 4 311 057
- US-A- 5 048 847

## Description

### Domaine technique

La présente invention concerne un dispositif de traversée étanche d'une cloison par un organe, tel qu'un organe servant à transmettre dans une enceinte des mouvements créés à l'extérieur de cette dernière tout en conservant l'étanchéité de ladite enceinte.

Certaines opérations doivent être réalisées dans des enceintes étanches dans lesquelles on doit pouvoir contrôler les conditions opératoires telles que l'atmosphère, la température et la pression. Ces opérations peuvent nécessiter des manipulations, demandant la présence d'appareils adaptés, commandés par des moteurs. Cependant, les moteurs ne peuvent pas toujours être placés à l'intérieur des enceintes, notamment en raison de leur encombrement, de la pollution qu'ils engendrent et/ou de l'incompatiblité des conditions opératoires avec le fonctionnement de ces moteurs.

Par exemple, le procédé de fabrication de pièces mono- ou polycristallines décrit dans le document EP-A-0 653 504 doit être mis en oeuvre en enceinte étanche car il impose des températures élevées qui nécessitent une atmosphère contrôlée pour éviter l'oxydation et la pollution des pièces fabriquées. De plus, ce procédé nécessite une manipulation des pièces mono- ou polycristallines au cours de leur fabrication, pour les soumettre à au moins un mouvement de translation perpendiculaire à la direction de tirage desdites pièces afin de leur donner des formes plus ou moins complexes.

Le problème est donc de transférer à l'intérieur d'une enceinte étanche des mouvements engendrés par des moteurs placés à l'extérieur de l'enceinte, tout en respectant le confinement, l'étanchéité de l'enceinte.

### Etat de la technique

Le document FR-A-2 707 180 décrit un couvercle agitateur pour machine d'agitation de peinture. Ce couvercle est pourvu d'un soufflet d'étanchéité classique sur l'axe agitateur, qui autorise des mouvements de rotation de ce dernier.

Dans le document "Les Techniques de l'Ingénieur" (Génie Mécanique B5 II 5421-1/6.11), l'étanchéité aux liaisons dynamiques est réalisée à l'aide d'un organe souple, métallique, facilement déformable et soudé ou brasé sur chacune des surfaces mobiles et fixes. Ce document décrit notamment l'utilisation de soufflets métalliques à disques soudés et de soufflets métalliques onduleux.

Dans le document "Les Techniques de l'Ingénieur" (Génie Mécanique B5 II 5421-9/7.12), l'étanchéité est assurée par un dispositif utilisant une transmission magnétique dans lequel une partie magnétique, solidaire d'un arbre menant d'un moteur à l'extérieur d'une enceinte étanche entraîne une autre partie magnétique solidaire d'un arbre mené à l'intérieur de l'enceinte étanche, la cloison de l'enceinte étanche étant amagnétique et mince.

Cependant, ces dispositifs, de par leur conception, ne permettent que le transfert de mouvements mécaniques simples à travers une cloison étanche, tels que la rotation d'un axe, la translation d'un organe dans la direction de traversée de la cloison étanche par cet organe, les mouvements étant toujours très limités dans les directions perpendiculaires au sens de traversée de la cloison étanche. Ces dispositifs ne permettent donc pas le transfert de mouvements mécaniques complexes, simultanés, à travers une cloison étanche.

Le document US-A-4 311 057 décrit un dispositif d'étanchéité pour la traversée étanche d'une cloison par une tige mobile. Ce dispositif est constitué d'un manchon cylindrique étanche et élastique disposé autour d'une tige mobile.

Ce manchon cylindrique élastique comprend : une première section concentrique par rapport à l'axe de la tige mobile et fixée à celle-ci, comprenant un premier arrangement ordonné linéaire de soufflets annulaires élastiques,
une seconde section concentrique par rapport à l'axe de la tige mobile et fixée à la paroi de la cloison, en relation concentrique par rapport à l'ouverture, comprenant un second arrangement ordonné linéaire de soufflets annulaires élastiques, et
une troisième section, interposée entre les première et seconde sections, entourant étroitement la tige mobile.

### Exposé de l'invention

La présente invention a précisément pour but de fournir un nouveau dispositif de traversée étanche d'une cloison qui permet de résoudre les problèmes évoqués ci-dessus.

Ce nouveau dispositif de traversée étanche d'une cloison, par un organe mobile selon au moins une direction de déplacement perpendiculaire à un axe de traversée de la cloison par ledit organe, se caractérise en ce qu'il comprend :
- au moins une virole montée de façon pivotante sur la cloison autour d'un axe de pivotement perpendiculaire à l'axe de traversée de la cloison par l'organe et à la direction de déplacement de l'organe, l'organe passant à l'intérieur de la virole ;
- une platine traversée de façon étanche part l'organe, mobile avec ledit organe pour ses déplacements dans ladite direction de déplacement ;
- une première et une deuxième membranes étanches, la première membrane reliant de façon étanche une première extrémité de la virole à la cloison, la deuxième membrane reliant de façon étanche une deuxième extrémité de la virole à la platine.

Lorsque l'organe est mobile selon plusieurs directions de déplacement perpendiculaires à l'axe de traversée de la cloison par cet organe, le dispositif comprend :
- une première et une deuxième viroles disposées bout à bout et traversées par l'organe, la première virole étant montée de façon pivotante sur la cloison autour d'un premier axe et reliée à la cloison de façon étanche par la première membrane étanche, et la deuxième virole étant montée de façon pivotante autour d'un deuxième axe et reliée à la platine de façon étanche par la deuxième membrane étanche ; le premier et le deuxième axes étant perpendiculaires entre eux et à l'axe de traversée de la cloison par l'organe ;
- un moyen de liaison étanche, interposé entre les extrémités adjacentes de la première virole et de la deuxième virole.

Selon une variante, le moyen de liaison étanche comprend une troisième virole comportant une première extrémité reliée de façon étanche à la deuxième extrémité de la première virole par une troisième membrane étanche et une deuxième extrémité reliée de façon étanche à une première extrémité de la deuxième virole par une quatrième membrane étanche.

Selon une autre variante, la première virole et la deuxième virole ayant des diamètres différents, le moyen de liaison étanche comprend une cinquième membrane étanche reliant les extrémités adjacentes de la première virole et de la deuxième virole.

De préférence, les membranes étanches sont des membranes élastomères.

Selon un mode particulier de réalisation, le dispositif comprend des moyens de commande de déplacement de la platine selon ladite direction de déplacement.

L'organe peut aussi être animé d'un mouvement de rotation autour de son axe de traversée de la cloison et/ou d'un mouvement de translation selon cet axe de traversée. Un joint d'étanchéité est alors interposé entre l'organe et la platine.

Dans une première application de l'invention au tirage de cristaux, l'organe est une broche de tirage.

Dans une deuxième application de l'invention au tirage de cristaux, l'organe est relié à un creuset.

### Brève description des figures

Les caractéristiques et avantages de l'invention apparaîtront mieux à la lumière de la description qui va suivre ; cette description porte sur des exemples de réalisation donnés à titre explicatif et non limitatif en se référant aux dessins annexés, sur lesquels :
- les figures 1A et 1B sont des vues en coupe transversale, d'un dispositif de traversée étanche d'une cloison par un organe, qui illustrent un premier mode de réalisation de la présente invention, respectivement dans un état non déformé et dans un état déformé, la coupe 1B étant perpendiculaire à la coupe 1A ;
- la figure 2 est une vue en coupe agrandie qui illustre un exemple d'un mode de fixation de l'une des membranes étanches du dispositif des figures 1A et 1B ;
- la figure 3 est une vue en coupe transversale, d'un dispositif, qui illustre un deuxième mode de réalisation de la présente invention ;
- la figure 4 est une vue en coupe longitudinale, d'un dispositif, qui illustre une variante du deuxième mode de réalisation de la présente invention ;
- la figure 5 est une vue en perspective schématique qui illustre une application du deuxième mode de réalisation du dispositif, selon la présente invention, au tirage de cristaux dans lequel l'organe est une broche de tirage de cristaux ;
- la figure 6 est une vue en perspective schématique qui illustre une application du deuxième mode de réalisation du dispositif selon la présente invention au tirage des cristaux, dans lequel l'organe est relié à un creuset.

### Exposé détaillé de modes de réalisation de l'invention

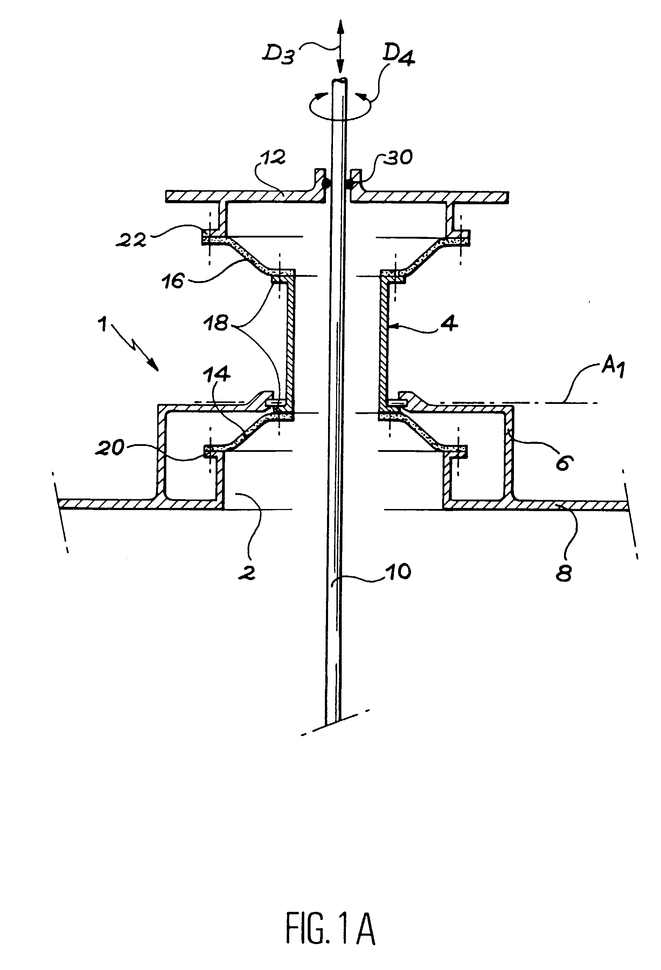

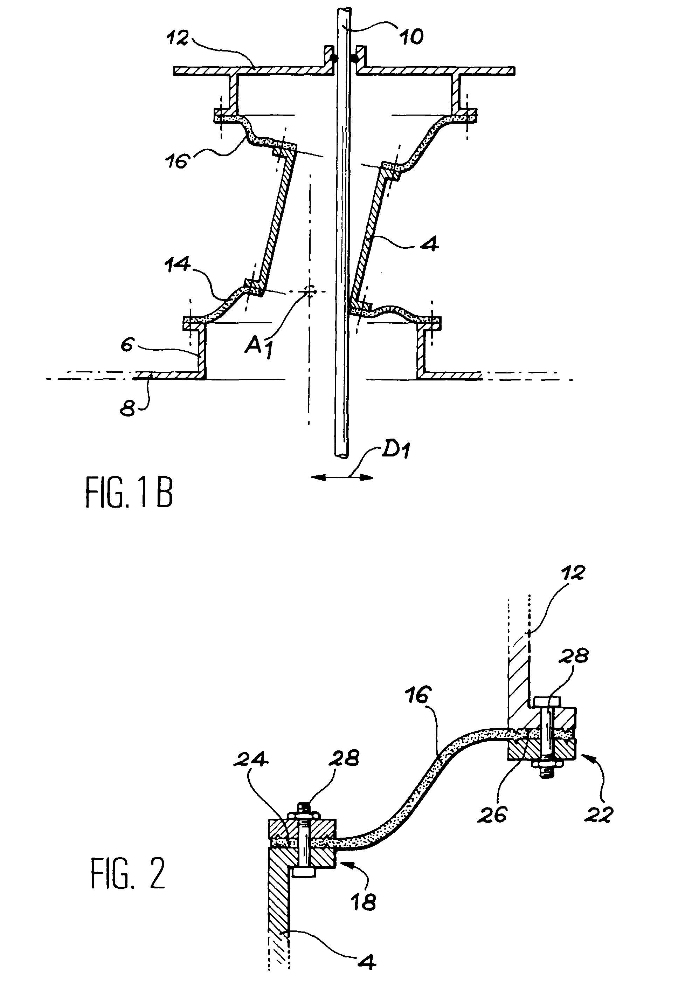

Un premier mode de réalisation de l'invention est illustré sur les figures 1A et 1B.

Une cloison étanche 8 délimite une enceinte étanche. Cette cloison étanche est traversée de part en part, au niveau d'une ouverture 2, par un organe 10.

L'organe 10 peut être mobile dans une direction de déplacement D1 (figure 1B) perpendiculaire à son axe de traversée de la cloison, dans la direction D3 de traversée de la cloison, et dans la direction de rotation D4 autour de son axe de traversée.

L'étanchéité au passage de l'organe 10 mobile à travers la cloison 8 est assurée grâce au dispositif 1 selon l'invention.

Sur ce dispositif 1, la référence 4 désigne une virole cylindrique montée autour de l'organe 10. Une première extrémité de la virole 4 est montée de façon pivotante, par un axe A1, sur un support 6 solidaire de la cloison 8, l'axe A1 étant perpendiculaire à l'axe de traversée de la cloison par l'organe mobile et à la direction D1.

La deuxième extrémité de la virole 4 est reliée à une platine 12 mobile. Cette platine est traversée de façon étanche par l'organe 10, de telle sorte que ce dernier peut tourner autour de son axe selon la direction D4 et se déplacer librement selon son axe dans la direction D3. En revanche, la platine 12 entraîne l'organe 10 lorsque celui-ci doit être déplacé latéralement, c'est-à-dire selon la direction de déplacement D1 perpendiculaire à l'axe de traversée de la cloison par l'organe mobile.

L'étanchéité entre la platine 12 et l'organe 10 mobile est assurée par un joint torique 30.

A sa première et à sa deuxième extrémités, la virole 4 comporte une bride extérieure 18.

La cloison 8 comporte également une bride extérieure 20, autour du passage 2, orientée vers la virole 4.

La première extrémité de la virole 4 est reliée de façon étanche à la cloison par une première membrane étanche 14 reliant la bride 20 de la cloison 8 à la bride 18 de la première extrémité de la virole 4.

La deuxième extrémité de la virole 4 est reliée à la platine 12 par une deuxième membrane étanche 16 reliant la bride 22 de la platine 12 à la bride 18 de la deuxième extrémité de la virole.

La figure 2 illustre plus en détail la liaison étanche assurée par la membrane étanche 16 entre la bride 18 de la deuxième extrémité de la virole 4 et la bride 22 de la platine 12. Dans cet exemple, les portées 24 et 26 respectivement des brides 18 et 22 sont usinées de manière à assurer une bonne tenue de la membrane étanche 16, attachée tout autour des brides par des boulons 28. La liaison étanche assurée par la membrane étanche 14 entre les brides 20 et 18 est réalisée de façon similaire.

Dans ce premier mode de réalisation du dispositif selon l'invention, les brides ne sont pas dans le même plan et la membrane étanche est bombée. Elle peut aussi avoir d'autres formes. Par exemple, la membrane étanche peut être plate, les brides sont alors au même niveau, mais cette configuration diminue la souplesse de l'ensemble.

Pour les systèmes devant travailler sous vide, l'épaisseur et la surface des membranes étanches sont calculées par les méthodes classiques de résistance des matériaux. En effet, lorsque l'enceinte est sous vide, il faut que la membrane résiste à la pression atmosphérique appliquée.

Les membranes étanches utilisées dans cet exemple sont des membranes élastomères étanches au vide. Les membranes élastomères présentent l'avantage d'une grande stabilité au travail mécanique et aux produits chimiques.

L'utilisation d'autres types de membranes étanches n'est pas exclue.

Dans ce mode de réalisation de l'invention, la platine 12 supporte l'organe 10, et les moteurs non représentés commandant les déplacements dudit organe (rotation D4, translation suivant l'axe D3 et translation suivant la direction D1).

Par exemple le déplacement suivant la direction D1 peut se faire sous l'effet d'un moteur, d'une vis sans fin et de rails de guidage non représentés.

La figure 1B illustre une coupe transversale à angle droit par rapport à la figure 1A du dispositif 1 mais dans laquelle la platine 12 a été déplacée selon la direction de déplacement D1.

Sur cette figure, la platine 12, déplacée de gauche à droite, a entraîné l'organe mobile 10 et, simultanément par l'intermédiaire des membranes élastomères, elle a entraîné la rotation de la virole 4 autour de l'axe A1.

La platine 12 est représentée à la fin de sa course. En effet, l'organe mobile est en butée contre la première extrémité de la virole 4. Les membranes 14 et 16 se sont déformées en rapport avec le déplacement de la platine 12 et avec la rotation de la virole autour de l'axe A1, et maintiennent l'étanchéité du système.

A titre d'exemple, le déplacement du dispositif entre les positions des figures 1A et 1B correspond à un déplacement de 8 cm de l'organe mobile dans un sens perpendiculaire à l'axe de traversée de la cloison par l'organe, pour une virole de 20 cm de diamètre interne et de 33 cm de longueur.

Ce premier mode de réalisation de l'invention, permet une mobilité de l'organe 10, traversant la cloison étanche, suivant la direction de déplacement D1 (perpendiculaire à l'axe de traversée de la cloison par l'organe), la translation suivant l'axe D3 et la rotation D4 tout en respectant l'étanchéité de l'enceinte.

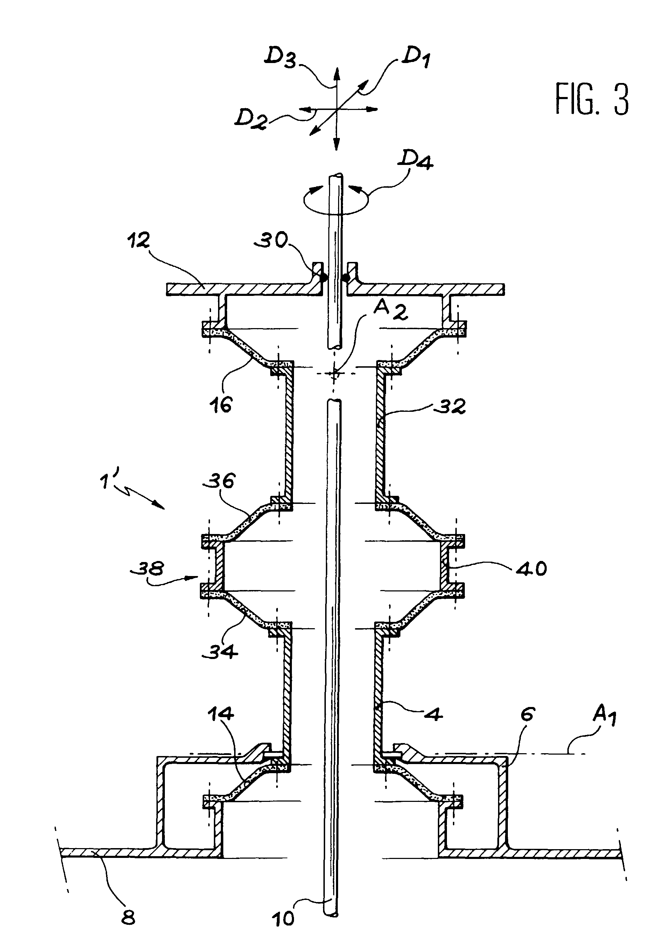

La figure 3 illustre un deuxième mode de réalisation du dispositif selon l'invention.

Ce dispositif 1' plus complexe permet le déplacement de la platine 12 simultanément dans une première direction de déplacement D1 et dans une deuxième direction de déplacement D2, D1 étant perpendiculaire à D2, et D1 et D2 étant perpendiculaires à l'axe de traversée de la cloison par l'organe 10.

Les déplacements perpendiculaires de la platine 12 suivant D1 et D2 sont assurés, par exemple, par une table de déplacement X-Y classique, à deux moteurs, non représentée.

Sur cette figure, on retrouve, traversée par l'organe 10, la virole 4 pivotant autour de l'axe A1, et le support 6, solidaire de la cloison étanche 8 d'une enceinte, sur lequel prend appui cet axe A1. On retrouve également la membrane élastomère 14 reliant de façon étanche la bride 20 de l'enceinte à la virole 4, et la membrane élastomère 16 reliée de façon étanche à la platine 12.

Aux éléments précités sont ajoutés une deuxième virole 32 dont une première extrémité est montée de façon pivotante par un axe A2, sur un support (non représenté) solidaire de la platine 12. L'axe de rotation A2 de la deuxième virole 32 est perpendiculaire à l'axe de rotation Al de la première virole 4 et à l'axe de traversée de la cloison par l'organe 10.

Les viroles 4 et 32 sont placées bout à bout et traversées de part en part par l'organe 10. La première extrémité de la virole 32 est reliée de façon étanche à la platine 12 par l'intermédiaire de la membrane élastomère 16. Dans cet exemple, les viroles 4 et 32 ont le même diamètre.

Un moyen de liaison étanche 38 est interposé entre les extrémités adjacentes de la première virole 4 et de la deuxième virole 32. Dans la variante représentée, ce moyen de liaison étanche comprend une troisième virole 40 munie de brides à ses extrémités. Le diamètre de cette troisième virole 40 est supérieur à celui des viroles 4 et 32.

Une première extrémité de la virole 40 est reliée de façon étanche à la deuxième extrémité de la virole 4 par fixation d'une membrane élastomère 34 sur les brides des viroles 4 et 40 par le même moyen que celui décrit en faisant référence à la figure 2. La deuxième extrémité de la virole 40 est reliée de la même façon à la deuxième extrémité de la virole 32, par fixation d'une membrane élastomère 36.

Dans ce deuxième mode de réalisation du dispositif selon l'invention, les déplacements de la platine 10 selon la direction D1 sont suivis par la virole 4 et ses déplacements selon la direction D2 sont suivis par la virole 32.

Les quatre membranes 14, 16, 34 et 36 se partagent les déformations dues aux déplacements D1 et D2, c'est-à-dire à la rotation des viroles 2 et 32 autour des axes respectifs A1 et A2.

Ce deuxième mode de réalisation du dispositif de traversée étanche d'une cloison par un organe mobile permet la transmission dans une enceinte étanche de mouvements créés à l'extérieur de l'enceinte dans toutes les directions, tout en respectant l'étanchéité de l'enceinte.

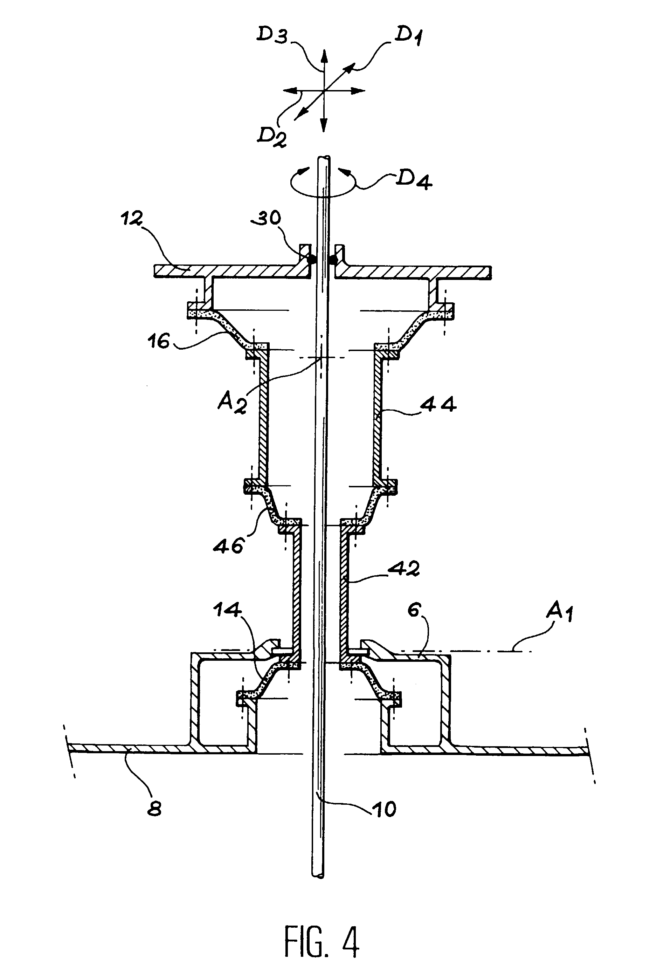

La figure 4 illustre une variante du deuxième mode de réalisation du dispositif selon l'invention. Sur cette figure, les références 42 et 44 désignent deux viroles cylindriques de diamètres différents, placées bout à bout et, traversées de part en part par l'organe mobile 10. On retrouve par ailleurs tous les éléments de la figure 3, excepté que le moyen de liaison étanche 38 est constitué dans ce cas par une seule membrane élastomère 46 reliant directement de façon étanche les extrémités adjacentes des deux viroles 44 et 42 selon le moyen de la figure 2.

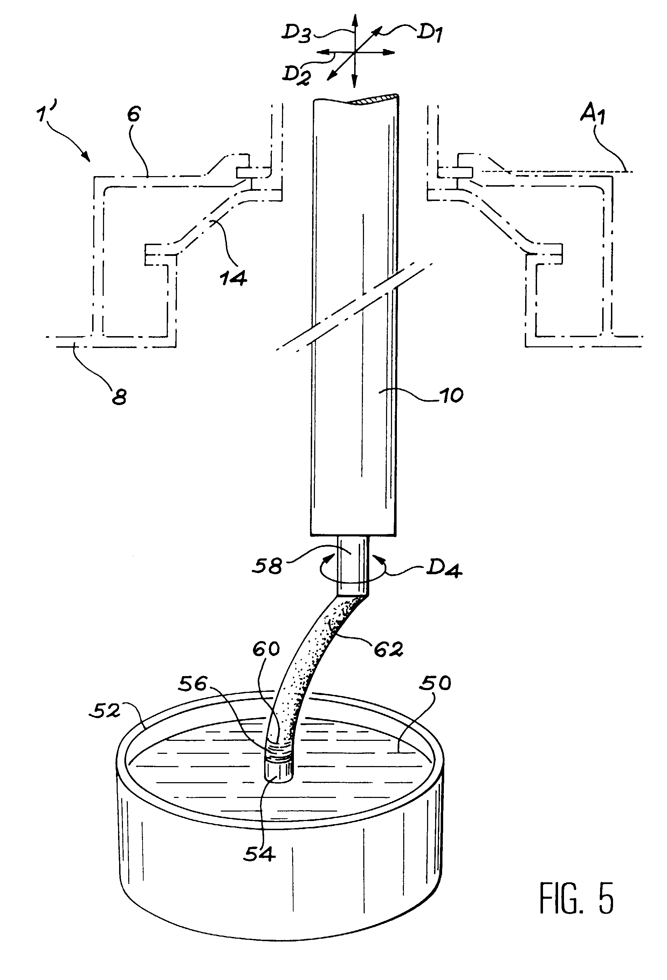

La figure 5 est une vue en perspective, schématique, qui illustre une application du deuxième mode de réalisation du dispositif selon l'invention, au tirage de cristaux. Ainsi, sur cette figure, on retrouve tous les éléments du dispositif 1' décrit sur la figure 3, et l'organe mobile 10 est une broche de tirage de cristaux.

En se référant au document EP-A-0 653 504, l'application du dispositif selon l'invention apparaît clairement.

Ce document décrit un procédé de fabrication d'une pièce mono- ou polycristalline consistant à former la pièce à partir d'un bain d'un matériau fondu, par tirage au travers d'une filière et cristallisation du matériau fondu sortant de la filière sur un germe. Le procédé décrit dans ce document prévoit de soumettre une filière et/ou un germe de cristallisation à au moins un mouvement de translation dans un plan perpendiculaire à la direction de tirage au cours de la réalisation de la pièce mono- ou polycristalline.

Sur la figure 5, le matériau fondu 50 est placé dans un creuset 52 et remonte par une filière 54 pour former un ménisque 56 et se solidifier sur un germe 58 qui est entraîné par la broche de tirage 10 dans une direction de tirage D3, l'interface solide-liquide 60 étant positionnée au-dessus de la filière.

La pièce mono- ou polycristalline formée porte la référence 62.

Ainsi, le dispositif 1' selon l'invention permet un déplacement de la broche de tirage 10 selon les directions D1, D2 et D3, au cours du tirage, de façon à obtenir des pièces cristallines de formes complexes, tout en respectant l'étanchéité de l'enceinte indispensable à la pureté et à l'homogénéité des cristaux formés.

En soumettant de plus, la broche de tirage à un mouvement de rotation D4 autour d'un axe centré sur le germe de ladite broche, on obtient des formes axi-symétriques.

Grâce au dispositif de l'invention, les moteurs de déplacement de l'organe 10 sont placés à l'extérieur de l'enceinte étanche.

Un autre avantage, apparaissant ici, en utilisant le dispositif selon l'invention est un désencombrement de l'enceinte.

Le procédé de tirage des cristaux est associé un certain nombre d'appareils de mesure et de régulation des conditions opératoires : pompage et gestion des gaz, chauffage, écran thermique, acquisition et contrôle des données et suivi visuel des manipulations et des résultats. Le désencombrement de l'enceinte est un avantage certain pour ce type de manipulations en confinement.

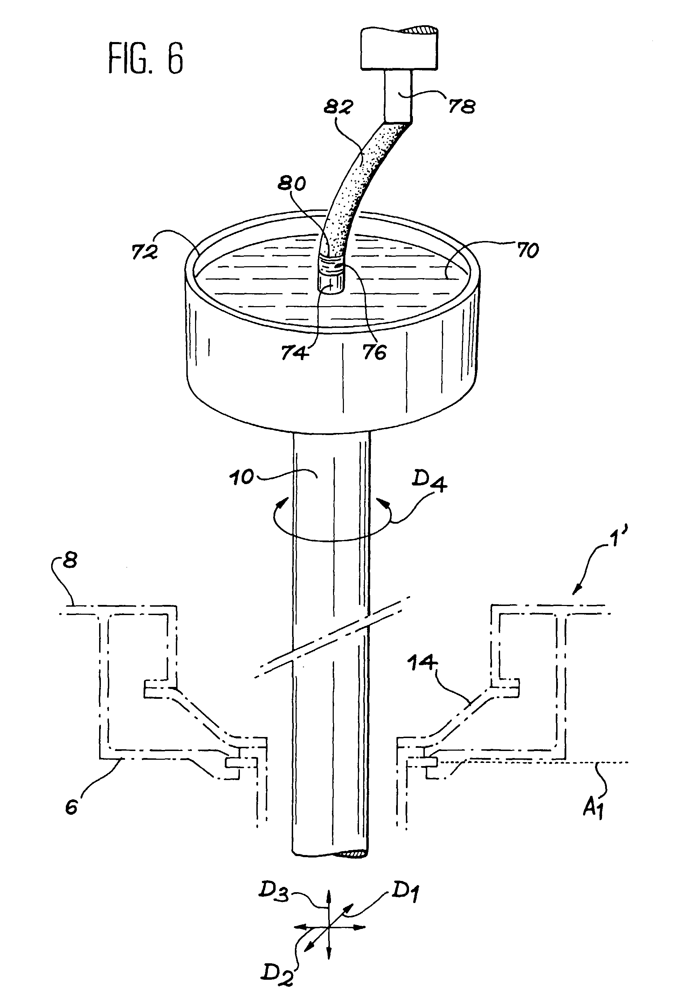

La figure 6 illustre une autre application du dispositif 1' selon la présente invention au tirage de cristaux.

Dans cette application, on utilise le dispositif décrit en référence à la figure 3. Cependant, le dispositif 1' est placé en dessous de l'enceinte étanche délimitée par la cloison 8, et l'organe mobile 10 porte un creuset 72. Le matériau fondu 70 est placé dans le creuset mobile 72 et remonte par une filière 74 pour former un ménisque 76 et se solidifier sur un germe 78 fixe. Ainsi, le dispositif 1' illustré par cette figure permet un déplacement du creuset 72 selon les directions D1, D2, D3 et D4 au cours du tirage et permet d'obtenir des pièces cristallines de forme complexe.

Une répartition encore différente des mouvements appliqués au creuset et à la broche de tirage au cours du tirage des cristaux n'est pas exclue. Ainsi, par exemple, on peut appliquer à la broche de tirage un mouvement de translation dans le sens de traversée de la cloison étanche et un mouvement de rotation, et appliquer au creuset les mouvements D1 et D2 perpendiculaires au sens de traversée de la cloison étanche par l'organe associé au creuset. Dans cet exemple, le dispositif 1' de la présente invention est placé comme sur la figure 6.

Ce dispositif est intéressant pour tout procédé nécessitant la transmission de mouvements au travers d'une enceinte étanche. Toutes les parois verticales et le fond de l'enceinte restent disponibles pour assurer d'autres fonctions : vide, passage de puissance de chauffage, observations, supports et déplacements.

## Revendications

1. Dispositif de traversée étanche d'une cloison (8) par un organe (10), mobile selon au moins une direction de déplacement perpendiculaire à l'axe de traversée de la cloison par ledit organe, caractérisé en ce que le dispositif comprend :
- au moins une virole (4) montée de façon pivotante sur la cloison (8) autour d'un axe de pivotement perpendiculaire à l'axe de traversée de la cloison par l'organe et à la direction de déplacement de l'organe, l'organe passant à l'intérieur de la virole ;
- une platine (12) traversée de façon étanche par l'organe (10), mobile avec ledit organe pour ses déplacements dans ladite direction de déplacement ;
- une première et une deuxième membranes étanches (14) et (16), la première membrane (14) reliant de façon étanche une première extrémité de la virole (4) à la cloison (8), la deuxième membrane (16) reliant de façon étanche une deuxième extrémité de la virole (4) à la platine (12).

2. Dispositif selon la revendication 1, dans lequel l'organe est mobile selon plusieurs directions de déplacement perpendiculaires à l'axe de traversée de la cloison par cet organe, caractérisé en ce que le dispositif comprend :
- une première et une deuxième viroles (4) et (32) disposées bout à bout et traversées par l'organe, la première virole (4) étant montée de façon pivotante sur la cloison (8) autour d'un premier axe et reliée à la cloison (8) de façon étanche par la première membrane étanche (14) et la deuxième virole (32) étant montée de façon pivotante autour d'un deuxième axe et reliée à la platine (12) de façon étanche par la deuxième membrane étanche (16) ; le premier et le deuxième axes étant perpendiculaires entre eux et à l'axe de traversée de la cloison par l'organe ;
- un moyen de liaison (38) étanche, interposé entre les extrémités adjacentes de la première virole (4) et de la deuxième virole (32).

3. Dispositif selon la revendication 2, caractérisé en ce que le moyen de liaison (38) étanche comprend une troisième virole (40) comportant une première extrémité reliée de façon étanche à la deuxième extrémité de la première virole (4) par une troisième membrane étanche (34) et une deuxième extrémité reliée de façon étanche à une première extrémité de la deuxième virole (32) par une quatrième membrane étanche (36).

4. Dispositif selon la revendication 2, caractérisé en ce que la première virole (42) et la deuxième virole (44) ayant des diamètres différents, le moyen de liaison étanche comprend une cinquième membrane étanche (46) reliant les extrémités adjacentes de la première virole (42) et de la deuxième virole (44).

5. Dispositif selon l'une quelconque des revendications 3 et 4, caractérisé en ce que les membranes étanches sont des membranes élastomères.

6. Dispositif selon la revendication 5, caractérisé en ce que l'organe est animé d'un mouvement de rotation autour de son axe de traversée de la cloison.

7. Dispositif selon la revendication 6, caractérisé en ce que l'organe est animé d'un mouvement de translation D3 selon la direction de l'axe de traversée de la cloison par cet organe.

8. Dispositif selon la revendication 7, caractérisé en ce qu'il comprend des moyens de commande de déplacement de la platine (12) selon au moins une direction de déplacement.

9. Dispositif selon la revendication 8, caractérisé en ce que ledit dispositif étant appliqué au tirage de cristaux, l'organe (10) est une broche de tirage.

10. Dispositif selon la revendication 9, caractérisé en ce que ledit dispositif étant appliqué au tirage de cristaux, l'organe (10) est relié à un creuset.

## Patentansprüche

1. Vorrichtung zur abgedichteten Durchführung eines Gliedes (10) durch eine Wand (8), das in wenigstens einer Richtung, die senkrecht ist zur Durchführungsachse des Gliedes durch die Wand , verschiebbar ist **dadurch gekennzeichnet**, dass die Vorrichtung umfasst:
- wenigstens einen Mantel (4), schwenkbar an der Wand (8) befestigt, um eine Schwenkachse herum, die senkrecht ist zu der Achse der Durchführung des Gliedes durch die Wand und zu der Verschiebungsrichtung des Gliedes, wobei das Glied im Innern des Mantels verläuft;
- eine in abdichtender Weise von dem Glied (10) durchquerte Platte (12), die mit dem Glied bei seinen Verschiebungen in der genannten Verschiebungsrichtung beweglich ist;
- eine erste und eine zweite Membran (14) und (16), wobei die erste Membran (14) in abdichtender Weise ein erstes Ende des Mantels (4) mit der Wand (8) verbindet und die zweite Membran (16) in abdichtender Weise ein zweites Ende des Mantels (4) mit der Platte (12) verbindet.

2. Vorrichtung nach Anspruch 1, bei der das Glied in mehreren Verschiebungsrichtungen beweglich ist, die senkrecht sind zu der Achse der Durchführung des Gliedes durch die Wand, dadurch gekennzeichnet, dass die Vorrichtung umfasst:
- einen ersten und einen zweiten Mantel (4) und (32), Ende an Ende angeordnet und durchquert von dem Glied, wobei der erste Mantel (4) an der Wand (8) befestigt ist, um eine erste Achse schwenkbar und durch die erste dichte Membran (14) in abdichtender Weise mit der Wand (8) verbunden, und der zweite Mantel (32), um eine zweite Achse schwenkbar, durch die zweite dichte Membran (16) in abdichtender Weise mit der Platte (12) verbunden ist;
- eine dichte Verbindungseinrichtung (38), eingefügt zwischen die benachbarten Enden des ersten Mantels (4) und des zweiten Mantels (32).

3. Vorrichtung nach Anspruch 2, dadurch gekennzeichnet, dass die dichte Verbindungs-einrichtung (38) einen dritten Mantel (40) umfasst, der ein erstes Ende aufweist, das durch eine dritte dichte Membran (34) in abdichtender Weise mit dem zweiten Ende des ersten Mantels (4) verbunden ist, und ein zweites Ende, das durch eine vierte dichte Membran (36) in abdichtender Weise mit dem ersten Ende des zweiten Mantels (32) verbunden ist.

4. Vorrichtung nach Anspruch 2, dadurch gekennzeichnet, dass der erste Mantel (42) und der zweite Mantel (44) unterschiedliche Durchmesser haben, die dichte Verbindungseinrichtung eine fünfte dichte Membran (46) umfasst, die die benachbarten Enden des ersten Mantels (42) und des zweiten Mantels (44) verbinden.

5. Vorrichtung nach einem der Ansprüche 3 und 4, dadurch gekennzeichnet, dass die dichten Membranen Elastomer-Membranen sind.

6. Vorrichtung nach Anspruch 5, dadurch gekennzeichnet, dass das Glied eine Drehbewegung um seine Durchführungsachse durch die Wand ausführt.

7. Vorrichtung nach Anspruch 6, dadurch gekennzeichnet, dass das Glied eine Translationsbewegung D3 ausführt, in der Richtung der Achse der Durchquerung der Wand durch dieses Glied.

8. Vorrichtung nach Anspruch 7, dadurch gekennzeichnet, dass sie Steuereinrichtungen zum Verschieben der Platte (12) in wenigstens eine Verschiebungsrichtung umfasst.

9. Vorrichtung nach Anspruch 8, dadurch gekennzeichnet, dass die genannte Vorrichtung beim Ziehen von Kristallen angewendet wird und das Glied (10) ein Ziehstift bzw. Ziehstab ist.

10. Vorrichtung nach Anspruch 9, dadurch gekennzeichnet, dass das Element (10) mit einem Tiegel verbunden ist.

## Claims

1. Device for the tight crossing of a partition (8) by a mobile member (10) in at least one displacement direction perpendicular to the crossing axis of the partition by said member, characterized in that it comprises:
- at least one sleeve (4) fitted to the partition (8) so as to pivot about a pivoting axis perpendicular to the crossing axis of the partition by the member and the displacement direction of said member, the member passing in the interior of the sleeve,
- a plate (12) tightly traversed by the member (10) and mobile with said member for its displacements in said displacement direction,
- a first and a second tight membranes (14, 16), the first membrane (14) tightly connecting a first end of the sleeve (4) to the partition (8), the second membrane (16) tightly connecting a second end of the sleeve (4) to the plate (12).

2. Device according to claim 1, in which the member is mobile in several displacement directions perpendicular to the crossing axis of the partition by said member, characterized in that the device comprises:
- a first and a second sleeves (4 , 32) placed end to end and traversed by the member, the first sleeve (4) being fitted to a partition (8) so as to pivot about a first axis and tightly connected to the partition (8) by the first tight membrane (14) and the second sleeve (32) is fitted so as to pivot about a second axis and is tightly connected to the plate (12) by the second tight membrane (16), the first and second axes being perpendicular to one another and to the crossing axis of the partition by the member,
- a tight connecting means (38) interposed between the adjacent ends of the first sleeve (4) and the second sleeve (32).

3. Device according to claim 2, characterized in that the tight connection means (38) comprises a third sleeve (40) having a first end tightly connected to the second end of the first sleeve (4) by a third tight membrane (34) and a second end tightly connected to a first end of the second sleeve (32) by a fourth tight membrane (36).

4. Device according to claim 2, characterized in that the first sleeve (42) and second sleeve (44) have different diameters, so that the tight connection means comprises a fifth tight membrane (46) connecting the adjacent ends of the first sleeve (42) and the second sleeve (44).

5. Device according to either of the claims 3 and 4, characterized in that the tight membranes are elastomeric membranes.

6. Device according to claim 5, characterized in that the member performs a rotary movement about its partition crossing axis.

7. Device according to claim 6, characterized in that the member performs a translation movement D3 in the direction of the crossing axis of the partition by said member.

8. Device according to claim 7, characterized in that it comprises means for controlling the displacement of the plate (12) in at least one displacement direction.

9. Device according to claim 8, characterized in that with said device applied to the pulling of crystals, the member (10) is a puling spindle.

10. Device according to claim 9, characterized in that the said device being applied to the pulling of crystals, the member (10) is connected to a crucible.
